# EUROPEAN PATENT APPLICATION

(11) **EP 2 046 026 A1**
(43) Date of publication of application: **08.04.2009**
(21) Application number: 07791080.0
(22) Date of filing: 20.07.2007
(51) Int. Cl.: H04N 5/64, G02B 27/02

(54) **OUTPUTTING APPARATUS AND IMAGE DISPLAY APPARATUS**

(30) Priority: 25.07.2006 JP 2006201492
(71) Applicant: Nikon Corporation, Chiyoda-ku Tokyo 100-8331 (JP)
(72) Inventor: KATO, Shigeru, Tokyo 100-8331 (JP); YOSHIKAWA, Yuki, Tokyo 100-8331 (JP)
(74) Representative: Viering, Jentschura & Partner
(86) International application number: PCT/JP2007/064343
(87) International publication number: WO 2008/013110

(57) **Abstract**

A display element (7) is turned off by stopping power supply when an image is displayed on a display section (6). When an image is displayed on the display section (6), the user is mostly observing the image with a head mount display (1) mounted on the user. At such time, since the display element (7) cannot be visually recognized, problem does not occur even when the display element is turned off. Furthermore, since the display element (7) is not required to be supplied with power supply, the service life of a battery is lengthened by such quantity. A display element (7) is turned off by stopping power supply when an image is displayed on a display section (6). When an image is displayed on the display section (6), the user is mostly observing the image with a head mount display (1) mounted on the user. At such time, since the display element (7) cannot be visually recognized, problem does not occur even when the display element is turned off. Furthermore, since the display element (7) is not required to be supplied with power supply, the service life of a battery is lengthened by such quantity.

## Description

### Technical Field

The present invention relates to an output device and a video output device.

### Background Art

Recently there have been various glasses-type video display devices in which video displayed on a display device such as a Liquid Crystal Display (LCD) is observed as a virtual image enlarged through an optical system having an eyepiece, a half mirror, or the like. The glasses-type video display devices are called a head-mounted display. For example, WO2004/061519A1 (Patent Document 1) discloses an example of the head-mounted display.

Many video display devices are configured in such a way that they are worn on a face while wrapped around a head. Video display devices are mainly classified into a binocular type and a monocular type. In the binocular type, the video display system is formed at positions corresponding to eyes. In the monocular type, the video display system is formed at a position corresponding to one of the right and left eyes. Usually the head-mounted display includes a display unit which displays video and a headphone which supplies a sound.

A manipulation component (such as a switch) for manipulating the head-mounted display and an operation display component may be provided in a control box or the like provided independently of a head-mounted display main body portion worn on a head. Recently, there is made an attempt to attach the manipulation component or the operation display component to a headphone portion of the head-mounted display main body portion worn on the head.
Patent Document 1: WO2004/061519A1

### Disclosure of the Invention

### Problem to be Solved by the Invention

In the head-mounted display, because the head-mounted display is worn on the head, there is a restriction to dimensions and a weight of the head-mounted display, and a large-capacity battery cannot be mounted on the head-mounted display. Therefore, there is a problem in that there is a limitation to a time the head-mounted display can be used without replacing or charging a battery.

In view of the foregoing, an object of the present invention is to provide an output device and a video display device which can be used for a long time without replacing or charging the battery.

### Means for Solving the Problem

In accordance with a first aspect of the present invention, an output device which provides at least one of video and sound to a user while the user wears the output device on a user's head, is provided. The output device has a function of turning off a light-emitting element or a display element located at a position where the user cannot visually recognize the light-emitting element or the display element in wearing the output device.

In accordance with a second aspect of the present invention, a video display device which displays video in front of an eye of a user while the user wears the video display device on a user's head, is provided. The video display device has a function of turning off a display element located at a position where the user cannot visually recognize the display element in wearing the video display device.

In accordance with a third aspect of the present invention, an output device which provides at least one of video and sound to a user while the user wears the output device on a user's head, is provided. The output device has a function of turning off a light-emitting element or a display element located at a position where the user cannot visually recognize the light-emitting element or the display element in wearing the output device, when the video or sound is provided.

In accordance with a fourth aspect of the present invention, a video display device which displays video in front of an eye of a user while the user wears the video display device on a user's head, is provided. The video display device has a function of turning off a display element located at a position where the user cannot visually recognize the display element in wearing the video display device, when the video is displayed.

In accordance with a fifth aspect of the present invention, a video display device which displays video in front of an eye of a user while the user wears the video display device on a user's head, is provided. The video display device has a function of turning off a display element located at a position where the user cannot visually recognize the display element in wearing the video display device, when a display unit which displays the video is located at a position corresponding to the front of the eye of the user in wearing the video display device.

### Effect of the invention

Accordingly, the aspects of the present invention can provide the output device and video display device which can be used for a long time without replacing or charging a battery.

### Brief Description of Drawings

Fig. 1 is a view showing an outline of a head-mounted display according to a first embodiment of the present invention.
Fig. 2 is a view showing an outline of a head-mounted display according to a second embodiment of the present invention.
Fig. 3 is a view showing an outline of a head-mounted display according to a third embodiment of the present invention.
Fig. 4 is a view showing an outline of a head-mounted display according to a fourth embodiment of the present invention.

### Explanations of Letters or Numerals

- 1: head-mounted display
- 2: headphone
- 3: headphone
- 4: connection unit
- 5: support arm
- 6: display unit
- 7: display element
- 8: support-arm position detecting sensor
- 9: human-body proximity switch
- 11: power status display
- 12: HMD content display screen
- 13: reproduced audio level display
- 14: HMD display equivalent screen

### Best mode for carrying out the Invention

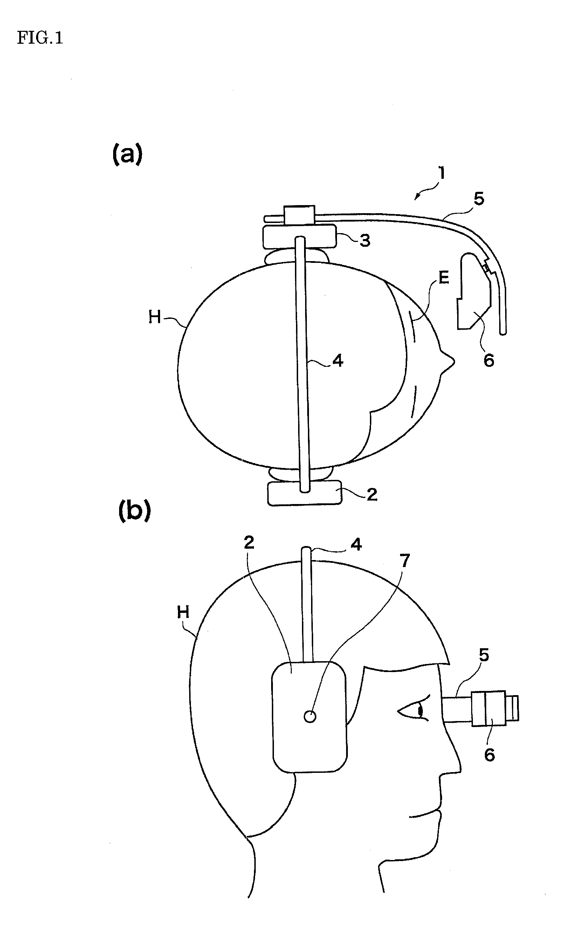

Embodiments of the present invention will be described below with reference to the drawings. Fig. 1 is a view showing an outline of a head-mounted display according to a first embodiment of the present invention. Fig. 1 (a) is a plan view of the head-mounted display, and Fig. 1(b) is a side view of the head-mounted display.

In the head-mounted display 1, headphones 2 and 3 are connected by a connection unit 4, and the connection unit 4 has elasticity. In wearing the head-mounted display 1, the head-mounted display 1 is worn on a head H such that the head-mounted display 1 is held by the elasticity of the connection unit 4 while ears are sandwiched between the headphones 2 and 3. A support arm 5 is attached to the headphone 3, and the support arm 5 is turnable about a turning axis which is of the lateral direction in wearing the head-mounted display 1. A display unit 6 is attached to a leading end portion of the support arm 5 so as to display a video to an eye E of a user.

A display element 7 is provided in the headphone 2 so as to display an operation of the head-mounted display 1. For example, the display element 7 such as LED is lit when the head-mounted display 1 can be used for left eye, and the display element 7 is turned off when the head-mounted display 1 can be used for right eye.

In the embodiment, while the video is displayed on the display unit 6, electric power supply to the display element 7 is stopped to turn off the display element 7. While the video is displayed on the display unit 6, mostly the user wears the head-mounted display 1 to observe the video. In such cases, because the user cannot visibly recognize the display element 7, any troubles are not generated even if the display element 7 is turned off. Therefore, a battery life is lengthened because a need of the electric power supply to the display element 7 is eliminated.

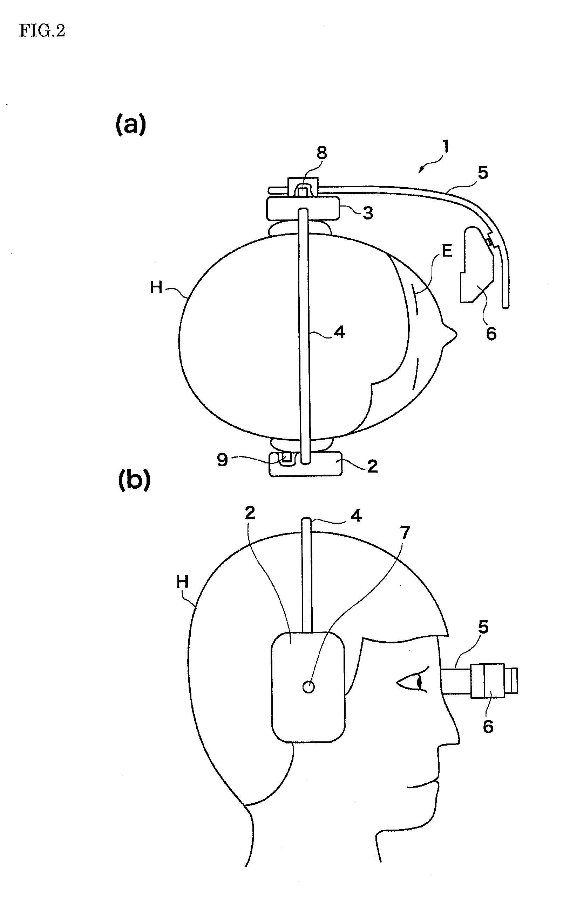

Fig. 2 is a view showing an outline of a head-mounted display according to a second embodiment of the present invention. Fig. 2 (a) is a plan view of the head-mounted display, and Fig. 2(b) is a side view of the head-mounted display. In the following drawings, the same component as that of Fig. 1 is designated by the same numeral, and the description will be omitted.

In Fig. 2, the support arm 5 is turnable about a turning axis which is of a vertical direction of the paper plane to the headphone 3. In wearing the head-mounted display 1, a position of the display unit 6 can be switched between a state in which the display unit 6 is located in front of the eye E and a state in which the display unit 6 is retracted from the front of the eye E. A support-arm position detecting sensor 8 detects the states, and the electric power supply to the display element 7 is stopped to turn off the display element 7 when the position of the display unit 6 is located in front of the eye E in wearing the head-mounted display 1. Mostly the user wears the head-mounted display 1 to observe the video, when the position of the display unit 6 is located in front of the eye E in wearing the head-mounted display 1. In such cases, because the user cannot visibly recognize the display element 7, any troubles are not generated even if the display element 7 is turned off. Therefore, the battery life is lengthened because the need of the electric power supply to the display element 7 is eliminated.

In Fig. 2, a human-body proximity switch 9 is provided, and the human-body proximity switch 9 is operated to detect that the user wears the head-mounted display 1 when the user wears the head-mounted display 1 on the head H. When the human-body proximity switch 9 detects that the user wears the head-mounted display 1 on the head, the electric power supply to the display element 7 is stopped to turn off the display element 7. When the user wears the head-mounted display 1, because the user cannot visibly recognize the display element 7, any troubles are not generated even if the display element 7 is turned off. Therefore, the battery life is lengthened because the need of the electric power supply to the display element 7 is eliminated.

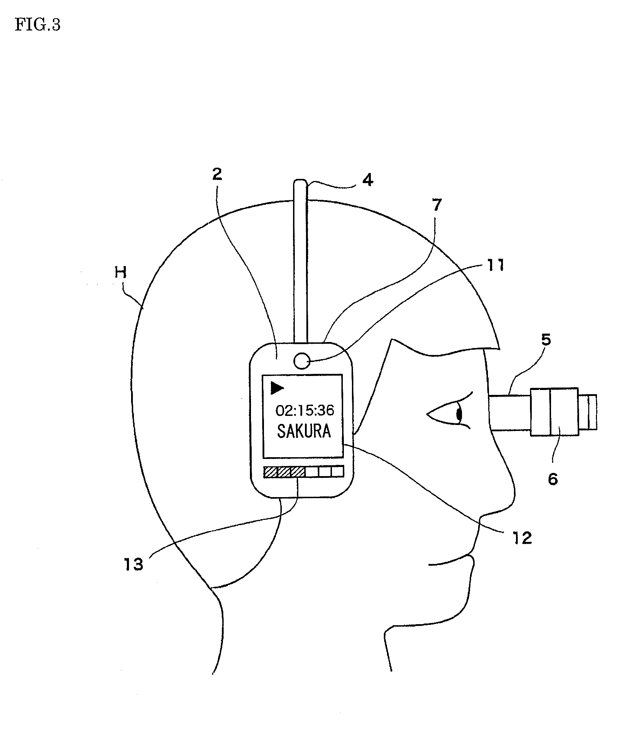

Fig. 3 is a side view showing an outline of a head-mounted display according to a third embodiment of the present invention. The head-mounted display of the third embodiment is substantially similar to the head-mounted display of the second embodiment except that a power status display 11, an HMD (Head-Mounted Display) content display screen 12, and a reproduced audio level display 13 are provided in the headphone 2. The power status display 11 is a light-emitting element such as LED which is lit when a main power supply of the head-mounted display is turned on. The HMD content display screen 12 is a display element such as a liquid crystal display. The HMD content display screen 12 displays contents (such as a title of reproduced music and a title of reproduced movie) reproduced by the display unit 6 or headphones 2 and 3 of the head-mounted display, and the HMD content display screen 12 displays a reproduction/stop state, a reproduction time, and the like. The reproduced audio level display 12 is a light-emitting element such as an LED indicator which indicates an audio signal level (magnitude) of contents (such as music) reproduced by the headphones 2 and 3.

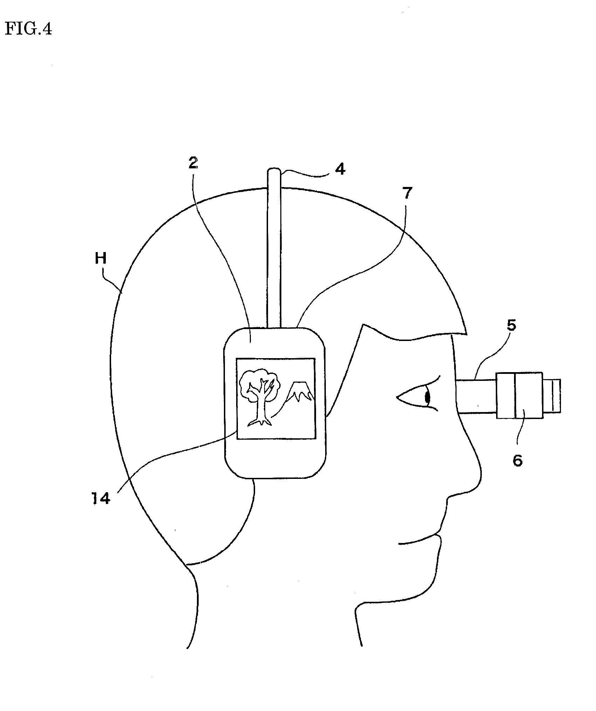

Fig. 4 is a side view showing an outline of a head-mounted display according to a fourth embodiment of the present invention. The head-mounted display of the fourth embodiment is substantially similar to the head-mounted display of the second embodiment except that an element for displaying a HMD display equivalent screen 14 is provided in the headphone 2. The HMD display equivalent screen 14 is a display element such as a liquid crystal display which displays the same video as that displayed on the display unit 6.

In the third and fourth embodiments, electric power supplied to an unnecessary display element for display is waste from the viewpoint of energy saving, and viewing information is exposed to the outside in wearing the head-mounted display when a display area is enlarged in order to perform easy viewable display during non-wearing state of the head-mounted display. Because display contents should be in individual privacy, desirably the display contents should not be disclosed to the outside. Therefore, when the user wears the head-mounted display to use the head-mounted display, preferably the power status display 11, the HMD content display screen 12, the reproduced audio level display 13, and the HMD display equivalent screen 14 is turned off or not displayed.

The head-mounted display 1 including the display unit 6 is described in the above-described embodiments. Alternatively, the items described in the embodiments may be applied to an output device such as an audio-dedicated headphone which supplies only sound without the display unit 6.

## Claims

1. An output device which provides at least one of video and sound to a user while the user wears the output device on a user's head, **characterized in that** the output device has a function of turning off a light-emitting element or a display element located at a position where the user cannot visually recognize the light-emitting element or the display element in wearing the output device.

2. A video display device which displays video in front of an eye of a user while the user wears the video display device on a user's head, **characterized in that** the video display device has a function of turning off a display element located at a position where the user cannot visually recognize the display element in wearing the video display device.

3. An output device which provides at least one of video and sound to a user while the user wears the output device on a user's head, **characterized in that** the output device has a function of turning off a light-emitting element or a display element located at a position where the user cannot visually recognize the light-emitting element or the display element in wearing the output device, when the video or sound is provided.

4. A video display device which displays video in front of an eye of a user while the user wears the video display device on a user's head, **characterized in that** the video display device has a function of turning off a display element located at a position where the user cannot visually recognize the display element in wearing the video display device, when the video is displayed.

5. A video display device which displays video in front of an eye of a user while the user wears the video display device on a user's head, **characterized in that** the video display device has a function of turning off a display element located at a position where the user cannot visually recognize the display element in wearing the video display device, when a display unit which displays the video is located at a position corresponding to the front of the eye of the user in wearing the video display device.
